# EUROPÄISCHE PATENTSCHRIFT

(11) **EP 2 700 294 B1**
(45) Veröffentlichungstag und Bekanntmachung des Hinweises auf die Patenterteilung: **18.10.2017**
(21) Anmeldenummer: 13168844.2
(22) Anmeldetag: 23.05.2013
(51) Int. Cl.: A01D 34/30

(54) **Schneidwerk für eine selbstfahrende Erntemaschine**
Cutting assembly for an agricultural harvester
Barre de coupe pour une moissonneuse automobile

(30) Priorität: 21.08.2012 DE 102012107682
(43) Veröffentlichungstag der Anmeldung: 26.02.2014
(73) Patentinhaber: CLAAS Selbstfahrende Erntemaschinen GmbH, 33428 Harsewinkel (DE)
(72) Erfinder: Bürmann, Dominik, 33415 Verl (DE); Flöthmann, Sebastian, 33334 Gütersloh (DE)

(56) Entgegenhaltungen:
- EP-A2- 2 364 584
- DE-A1- 2 550 331
- DE-A1- 3 207 418
- DE-U1- 20 108 221

## Beschreibung

Die Erfindung betrifft ein Schneidwerk für eine selbstfahrende Erntemaschine mit einem Mähwerk sowie mit einer Getriebebaugruppe, die zumindest einen innerhalb eines Getriebegehäuses angeordneten Kegeltrieb aufweist und deren Abtriebswelle über eine Gelenkwelle mit einer Eingangswelle eines einen Exzentertrieb aufweisenden Messergetriebes verbunden ist, wobei das Messergetriebe in einem Gehäuse angeordnet ist.

Eine entsprechende Getriebebaugruppe für den Antrieb eines Mähwerks ist vorgesehen, um über die Gelenkwelle das einen Exzentertrieb aufweisende Messergetriebe anzutreiben. Über den Exzentertrieb wird die auf das Messergetriebe übertragene rotative Antriebsbewegung in eine Kurbelbewegung umgesetzt, die zur Erzeugung einer oszillierenden Bewegung des Mähmessers dient. Das Mähmesser besteht in der Regel aus einem Messerbalken mit daran befestigten Messerklingen, wobei der Messerbalken in Fingern des Mähwerks geführt ist. Die Finger bilden dabei aufgrund ihres Zusammenwirkens mit den einzelnen Messerklingen Gegenschneiden, so dass das zu erntende Halmgut von den Messerklingen und den Fingern abgetrennt wird. Es sind allerdings auch Mähwerke bekannt, bei denen zwei Mähmesser gegenläufig zueinander bewegt werden, wobei die auf den beiden Messerbalken angeordneten Messerklingen entsprechende Schneiden und Gegenschneiden bilden.

Ein Schneidwerk für eine selbstfahrende Erntemaschine der im Oberbegriff des Patentanspruchs 1 angegebenen Gattung ist aus der EP 2 364 584 A2 bekannt. Die Getriebebaugruppe, die zum einen über einen Kegeltrieb und eine diesem nachgeordnete Gelenkwelle das Messergetriebe und über einen weiteren Kegeltrieb einen innerhalb einer Schneidwerksmulde des Schneidwerks angeordneten Querförderer antreibt, wird von einer Antriebswelle eines Schrägförderers aus über ein Element angetrieben, das ein Drehspiel zulässt. Dieses ein Drehspiel zulassende Element soll dabei vorzugsweise zwischen in Umfangsrichtung wirkenden Anschlägen ein Elastomer aufnehmen. Es ist das Ziel, dadurch die Amplitude der Schwingung des Antriebsstranges zu begrenzen.

Weiterhin ist aus der DE 12 60 844 B eine Überlasteinrichtung für einen Mähmesserantrieb eines über eine Mähkurbelstange angetriebenen Mähbalkens bekannt. Derartige Mähbalken werden im Frontbereich von Einachsschleppern oder seitlich eines Standardackerschleppers zwischen dessen Vorder- und Hinterachse angeordnet. Bei Einachsschleppern wird die Mähkurbelstange direkt von der Kurbelwelle des Verbrennungsmotors angetrieben. Standardackerschlepper werden mit einem unterhalb des Schleppergetriebes angeflanschten Mähgetriebes ausgerüstet. Von diesem Mähgetriebe oder dem Verbrennungsmotor des Einachsschleppers geht eine als Kurbelwelle oder Kurbelachse bezeichnete Abtriebswelle aus, die ein Kurbelelement aufnimmt, an welchem ein als Scheibe oder Ring ausgebildetes Element frei drehbar geführt ist. Dieses letztgenannte Element nimmt über einen Kurbelzapfen die Treibstange auf, die unmittelbar mit einem am Mähmesser vorgesehenen Kugelkopf verbunden ist. Zur Übertragung des Drehmoments zwischen dem Kurbelelement und dem als Scheibe oder Büchse ausgebildeten Element sind Raststifte oder -kugeln vorgesehen, die in axialer oder radialer Richtung verlaufen und in entsprechende an den vorgenannten Elementen ausgebildete Ausnehmungen eingreifen.

Die Druckschrift DE 201 08 221 U1 offenbart eine Heuwerbungsmaschine mit synchron anzutreibenden Maschinengruppen, die innerhalb des Antriebs der Maschine eine Überlastkupplung zur Absicherung des Antriebsstranges vorsieht. Für jede der Maschinengruppen ist im Leistungsverzweigungsbereich jeweils eine als Sperrkörperkupplung ausgebildete Überlastkupplung vorgesehen.

Die Druckschrift DE 32 07 418 A1 offenbart ein Frontmähwerk für Motormäher. Das Frontmähwerk weist ein Antriebsgehäuse auf, in dem ein Zahnradkurbelgetriebe und eine Überlastkupplung angeordnet sind. Die Überlastkupplung ist zwischen einer Eingangswelle und einem Exzentertrieb angeordnet.

Es ist Aufgabe der vorliegenden Erfindung, innerhalb eines gattungsgemäßen Antriebsstranges für ein Mähwerk eine Einrichtung zur Drehmomentbegrenzung anzuordnen, die für ein Schneidwerk einer selbstfahrenden Erntemaschine eine baulich günstige Anordnung und Variationsmöglichkeiten hinsichtlich des Betriebs des Schneidwerks zulässt.

Diese Aufgabe wird, ausgehend vom Oberbegriff des Patentanspruchs 1, in Verbindung mit dessen kennzeichnenden Merkmalen gelöst. Die darauf folgenden abhängigen Patentansprüche geben jeweils vorteilhafte Weiterbildungen der Erfindung wieder.

Gemäß dem kennzeichnenden Teil des Patenanspruchs 1 soll innerhalb des Getriebegehäuses zwischen dem Kegeltrieb und der Gelenkwelle eine mit zumindest einem vorgespannten Rastkörper versehene Überlastkupplung angeordnet sein. Diese Überlastkupplung ist folglich in das Getriebegehäuse der Getriebebaugruppe integriert oder alternativ dazu innerhalb des Gehäuses des Messergetriebes angeordnet. Dadurch wird der zwischen dem Getriebegehäuse der Getriebebaugruppe und dem Gehäuse des Messergetriebes vorhandene Bauraum, der für die Anordnung der Gelenkwelle vorgesehen ist, vergrößert. Die Überlastkupplung, die beim Überschreiten eines maximalen Drehmoments ausgelöst wird, verhindert eine Überbeanspruchung des Antriebsstranges beim Blockieren des Mähmessers oder eines sehr hohen Widerstands am Mähmesser. Eine solche Überlastkupplung ist alternativ auch innerhalb des Gehäuses, zwischen der Eingangswelle und dem Exzentertrieb anordbar.

Demgegenüber ist bei der Anordnung nach der EP 2 364 584 A2 weder innerhalb der Getriebebaugruppe noch innerhalb des Messergetriebes eine Überlastkupplung vorgesehen. Nach der DE 12 60 844 B soll zwar innerhalb des Antriebs der Treibstange eine Überlastkupplung angeordnet sein, diese ist zum einen aber nicht für ein Schneidwerk einer selbstfahrenden Erntemaschine vorgesehen und zum anderen auch nicht in ein Getriebegehäuse einer Getriebebaugruppe integriert. Wie bereits dargelegt, ist die Überlastkupplung an der die Treibstange über einen exzentrisch angeordneten Zapfen aufnehmenden Scheibe oder Hülse angeordnet.

In weiterer Ausgestaltung der Erfindung soll ein das Mähwerk aufnehmender Schneidtisch gegenüber einer einen Querförderer aufnehmenden Schneidwerksmulde längsverschiebbar ausgebildet sein, wobei die Getriebebaugruppe der Schneidwerksmulde und das Messergetriebe dem Schneidtisch zugeordnet sind und wobei die Gelenkwelle teleskopisch ausgebildet ist. Ein derartiges Schneidwerk, das auch als Vario-Schneidwerk bezeichnet wird, lässt sich im Hinblick auf die Art und den Zustand des Erntegutes verstellen, indem über entsprechende Stellelemente der das Mähwerk aufnehmende Schneidtisch gegenüber dem Querförderer verstellt wird. So wird beispielsweise bei der Ernte von Raps, der im Vergleich zu Getreide eine deutlich größere Halmlänge und eine größere Halmmenge im Bestand aufweist, ein großer Abstand zwischen dem Mähwerk und dem Querförderer eingestellt, also der Schneidtisch in Arbeitsrichtung verschoben.

Dieser Verstellweg ist aber begrenzt durch den maximalen Verschiebeweg der teleskopisch ausgebildeten Gelenkwelle, der durch die ineinander geführten Profilrohre der Gelenkwelle, welche eine entsprechende Länge aufweisen müssen, vorgegeben ist. Würde nun die Überlastkupplung außerhalb des Getriebegehäuses oder des Gehäuses des Messergetriebes angeordnet werden, so würde sich dadurch der für die Unterbringung der Gelenkwelle vorgesehene Abstand entsprechend der Baulänge der Überlastkupplung verringern, wodurch auch der Verschiebeweg reduziert wird. Das führt dazu, dass der Verschiebeweg der Gelenkwelle nicht mehr ausreicht, um den Schneidtisch zwischen einer maximal eingefahrenen Position und einer maximal ausgefahrenen Position zu bewegen. Es gibt allerdings Systeme, bei denen in diesem Fall zum Erreichen einer maximal ausgefahrenen Position des Schneidtisches die Gelenkwelle mit relativ großem Serviceaufwand verlängert werden muss. Diese Probleme werden durch die vorliegende Erfindung dadurch beseitigt, dass aufgrund der Anordnung der Überlastkupplung innerhalb des Getriebegehäuses oder innerhalb des Gehäuses zwischen der Getriebebaugruppe und dem Messergetriebe eine Gelenkwelle mit einem ausreichenden Verschiebeweg einfügbar ist.

Gemäß dem kennzeichnenden Teil des Patenanspruchs 1 ist weiterhin vorgesehen, dass auf der Abtriebswelle eine Nabe frei drehbar angeordnet ist, die mit der Gelenkwelle verbunden ist und mit einem drehfest auf der Abtriebswelle angeordneten Mitnehmer zusammenwirkt, wobei die Nabe und/oder der Mitnehmer mit jeweils zumindest eines Ausnehmung zur Aufnahme von zumindest einer als Rastkörper wirkenden Sperrkugel ausgebildet sind. Dabei soll der jeweilige Rastkörper an einem der beiden Bauelemente durch einen Käfig oder in einer als Bohrung ausgebildeten Ausnehmung geführt sein und in eine dessen Außenkontur angepasste Ausnehmung einrasten. Diese Ausnehmung, aus welcher der Rastkörper beim Überschreiten eines maximalen Drehmoments herausbewegt wird, soll über einen rampenartigen Auslauf verfügen.

In Weiterbildung dieser Anordnung der Rastkörper sollen die Ausnehmungen in der Nabe und im Mitnehmer derart angeordnet sein, dass nach einer drehmomentabhängigen Entsperrung des Antriebs der Gelenkwelle eine Sperrung nach einer Verdrehung des Mitnehmers gegenüber der Nabe um 360°erfolgt. Damit wird sichergestellt, dass der nachfolgende Exzentertrieb des Messergetriebes in Bezug zum gesamten Antriebsstrang stets in der gleichen Position angetrieben wird.

Gemäß einer vorteilhaften Ausgestaltung der Erfindung soll die jeweils zumindest eine Ausnehmung jeweils in einander zugewandten Stirnflächen der Nabe und des Mitnehmers angeordnet sein, wobei der Mitnehmer auf der Abtriebswelle in axialer Richtung verschiebbar geführt und in Richtung der Nabe federbelastet ist. Sowohl die angeordnet, so dass die gesamte Überlastkupplung in die Getriebebaugruppe integriert ist. Folglich werden die baulichen Abmessungen der Getriebebaugruppe durch die Verwendung der Überlastkupplung nicht vergrößert.

In diesem Zusammenhang wird weiterhin vorgeschlagen, am Ende der Abtriebswelle auf dieser einen Anlaufring anzuordnen, an dem sich die Nabe über ein Axiallager abstützt. Sowohl der Anlaufring als auch das Axialnadellager können dabei innerhalb der axialen Erstreckung der Nabe angeordnet sein, so dass in Folge dessen die axiale Baulänge der Gesamtanordnung verkürzt werden kann.

Zur exakten Führung der Sperrkugeln in Bezug auf die in der Nabe und im Mitnehmer angeordneten Ausnehmungen ist weiterhin ein kreisringförmiger Käfig vorgesehen, der die jeweilige Sperrkugel in einer konzentrischen Umlaufbahn führt. Dadurch können Wanderbewegungen der zumindest einen Sperrkugel, die die Funktion der Überlastkupplung erheblich beeinträchtigen würden, vermieden werden.

Wenn die Ausnehmungen für die Aufnahme des zumindest einen Rastkörpers in Stirnflächen der Nabe und des Mitnehmers ausgebildet sind, soll der Mitnehmer über zumindest eine Tellerfeder in Richtung der Nabe vorgespannt sein. Es kann sich dabei insgesamt um ein Tellerfederpaket handeln, das sich vorzugsweise an einer ringförmigen Anlagefläche der Abtriebswelle abstützt. Die Verwendung einer einzelnen Tellerfeder oder eines Tellerfederpakets zur axialen Vorspannung des Mitnehmers weist dabei ebenfalls den Vorteil einer sehr kompakten Bauweise auf, und die entsprechende Vorspannung kann mit einer optimalen Federkennlinie erfolgen.

In weiterer Ausgestaltung der Erfindung soll die Getriebebaugruppe eine Getriebeeingangswelle mit einem auf dieser angeordneten Antriebskegelrad aufweisen, welches mit einem ersten einen Querförderer der Erntemaschine antreibenden Abtriebskegelrad in Eingriff steht, wobei das erste Abtriebskegelrad in ein zweites die Abtriebswelle antreibendes Abtriebskegelrad eingreift, wobei das zweite Abtriebskegelrad auf einer parallel zur Abtriebswelle angeordneten Zwischenwelle angeordnet ist und wobei die Zwischenwelle die Abtriebswelle über eine Stirnradstufe antreibt. Dabei kann eine auf der Abtriebswelle als Hohlwelle ausgebildete, einen Flansch aufweisende Nabe drehbar gelagert sein, die ein Abtriebsrad der Stirnradstufe aufnimmt, wobei auf der Abtriebswelle ein Mitnehmer drehfest und mittels einer Tellerfeder axial verschiebbar geführt ist und wobei zwischen Stirnflächen des Flansches und des Mitnehmers innerhalb zumindest einer in diesen jeweils vorgesehenen Ausnehmung der zumindest eine Rastkörper angeordnet ist. Dieser Mitnehmer soll ebenfalls über zumindest eine Tellerfeder in Richtung der Nabe vorgespannt sein, und der entsprechende als Sperrkugel ausgebildete Rastkörper wird dabei ebenfalls in einem kreisringförmigen Käfig geführt. Diese Gesamtanordnung des Rädertriebes und der Überlastkupplung innerhalb des Getriebegehäuses führt ebenfalls zu einer sehr kompakten Bauweise, so dass die entsprechende an die Abtriebswelle angekuppelte Gelenkwelle aufgrund des im eingeschobenen Zustand des Schneidtisches größeren Abstandes zwischen der Getriebebaugruppe und dem Messergetriebe mit vergleichsweise langen Profilrohren versehen werden kann, wodurch sich der Verschiebeweg der Gelenkwelle deutlich erhöhen lässt.

Die Erfindung ist nicht auf die angegebene Kombination der Merkmale des unabhängigen Patentanspruchs 1 mit den darauf rückbezogenen Patentansprüchen beschränkt. Es ergeben sich darüber hinaus Möglichkeiten, einzelne Merkmale, auch soweit sie aus den Patentansprüchen, den Vorteilsangaben zu den Patentansprüchen, der nachfolgenden Beschreibung der Ausführungsbeispiele oder zumindest aus der Zeichnung hervorgehen, miteinander zu kombinieren. Die Bezugnahme der Patentansprüche auf die Zeichnung durch die Verwendung von Bezugszeichen soll den Schutzumfang der Patentansprüche nicht beschränken.

Vorteilhafte Ausgestaltungen der Erfindung werden nachfolgend unter Bezugnahme auf die Zeichnung erläutert. Es zeigen:
- Figur 1: eine schematische Ansicht eines Schneidwerks einer Erntemaschine in Draufsicht, bei der ein Schneidtisch gegenüber einer Schneidwerksmulde verstellbar ist,
- Figur 2: einen Teil einer Seitenansicht eines Schneidwerks mit unterschiedlichen Lagen eines Messergetriebes gegenüber einer Getriebebaugruppe,
- Figur 3: eine perspektivische Ansicht einer Räderanordnung einer erfindungsgemäßen Getriebebaugruppe,
- Figur 4: einen Teillängsschnitt durch eine in einem Getriebegehäuse angeordnete Überlastkupplung und
- Figur 5: einen Längsschnitt durch eine alternative Ausbildung und Anordnung einer Überlastkupplung.

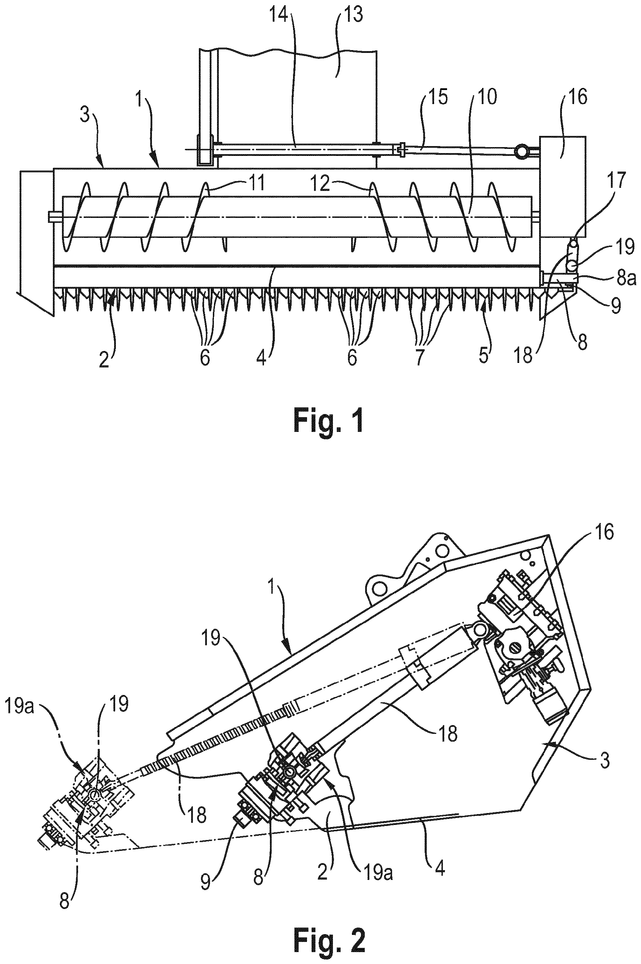

In der Figur 1 ist mit 1 ein Schneidwerk dargestellt, das aus einem Schneidtisch 2 und einer Schneidwerksmulde 3 besteht. Wie eine in dieser Ansicht erkennbare Trennebene 4 verdeutlicht, ist der Schneidtisch baulich von der Schneidwerksmulde 3 getrennt, so dass er sich gegenüber dieser in Richtung des Erntevorgangs oder in entgegengesetzter Richtung verstellen lässt. Der Schneidtisch 2 nimmt ein Mähmesser 5 auf, das aus einem nicht näher dargestellten Messerbalken und einer Vielzahl darauf befestigter Messerklingen 6 besteht. Dabei ist das Mähmesser 5 in Fingern 7 geführt, welche am Schneidtisch 2 befestigt sind.

Weiterhin ist am Ende des Mähmessers 5 ein Messergetriebe 8 angeordnet, wobei dieses Messergetriebe 8 ein Gehäuse 8a aufweist und das Mähmesser 5 mit Hilfe eines Kurbelzapfens 9 antreibt. Die Schneidwerksmulde 3 nimmt einen Querförderer 10 auf, der mit gegenläufigen Schneckengängen 11 und 12 versehen ist, so dass das vom Mähmesser 5 im Zusammenwirken mit den Fingern 7 geschnittene Erntegut mittig der Schneidwerksmulde 3 zusammengeführt wird. Von dort aus wird das Erntegut an einen Schrägförderer 13 übergeben, der dieses anschließend einer nicht dargestellten Aufbereitungseinrichtung, wie beispielsweise einer Dresch- und Trenneinrichtung eines Mähdreschers oder einer Häckseleinrichtung eines Feldhäckslers zuführt.

Das gesamte Schneidwerk 1 ist vorzugsweise durch eine nicht näher dargestellte Kuppeleinrichtung mit dem Schrägförderer 13 verbindbar, so dass es sich gegen einen anderen Erntevorsatz austauschen und außerdem für eine Straßenfahrt der Erntemaschine hinter dieser auf einem Anhänger transportieren lässt. Dabei erfolgt der Antrieb des Schneidwerks 1 von einer im Schrägförderer 13 angeordneten Welle 14 aus über eine Kardanwelle 15 auf eine Getriebebaugruppe 16. Diese Getriebebaugruppe 16 treibt zum einen das Messergetriebe 8 und zum anderen den Querförderer 10 sowie eine nicht näher dargestellte Haspel an. Zum Antrieb des Messergetriebes 8 geht, wie der Figur 1 entnommen werden kann, von der Getriebebaugruppe 16 eine Abtriebswelle 17 aus, die mit einer Gelenkwelle 18 verbunden ist, wobei diese Gelenkwelle 18 mit ihrem anderen Ende trieblich mit einer Eingangswelle 19 des Messergetriebes 7 verbunden ist. An der Eingangswelle 19 ist eine topfförmig gestaltete Schwungmasse 19a zur Reduzierung der aus dem Exzentertrieb des Messergetriebes 8 und aus der hin und her bewegten Masse des Mähmessers resultierenden Massenkräfte dient. Diese Gestaltung der Schwungmasse 19a ermöglicht ebenfalls eine Verlängerung der Gelenkwelle 18, woraus eine Vergrößerung des Verschiebeweges resultiert.

Ein entsprechend der schematischen Darstellung der Figur 1 ausgebildetes Schneidwerk 1 ist teilweise in der Figur 2 dargestellt. Durch gestrichelte Linien wird dabei eine Stellung des Schneidtisches 2 gezeigt, in der dieser gegenüber der Schneidwerksmulde 3 in Längsrichtung verstellt ist. Aus der Figur 2 geht außerdem hervor, dass die Gelenkwelle 18 in dieser gestrichelt dargestellten Position des Messergetriebes 8 in ihre maximale Längserstreckung verstellt ist. Dagegen ist sie in der eingeschobenen Position des Schneidtisches 2 in ihre minimale Längserstreckung verstellt.

Die Anordnung des Messergetriebes 8 am Schneidtisch 2 und der Getriebebaugruppe 16 an der Schneidwerksmulde 3 ist im Wesentlichen dadurch vorgegeben, dass zum einen vom Messergetriebe 8 die oszillierende Bewegung auf das Mähmesser 5 übertragen werden muss, und zum anderen dadurch, dass von der Welle 14 über die Kardanwelle 15 die Getriebebaugruppe 16 angetrieben werden muss. Daraus ergibt sich ein bestimmter Abstand des Messergetriebes 8 zur Getriebebaugruppe 16, wodurch im Wesentlichen die Länge der Gelenkwelle 18 bestimmt ist. Im Übrigen muss im Antrieb des Mähmessers 5 eine Einrichtung vorgesehen sein, die beim Auftreffen des Mähmessers 5 auf Steine, Metallteile usw. den Antrieb aufgrund des Überschreitens eines maximalen Drehmoments abschaltet.

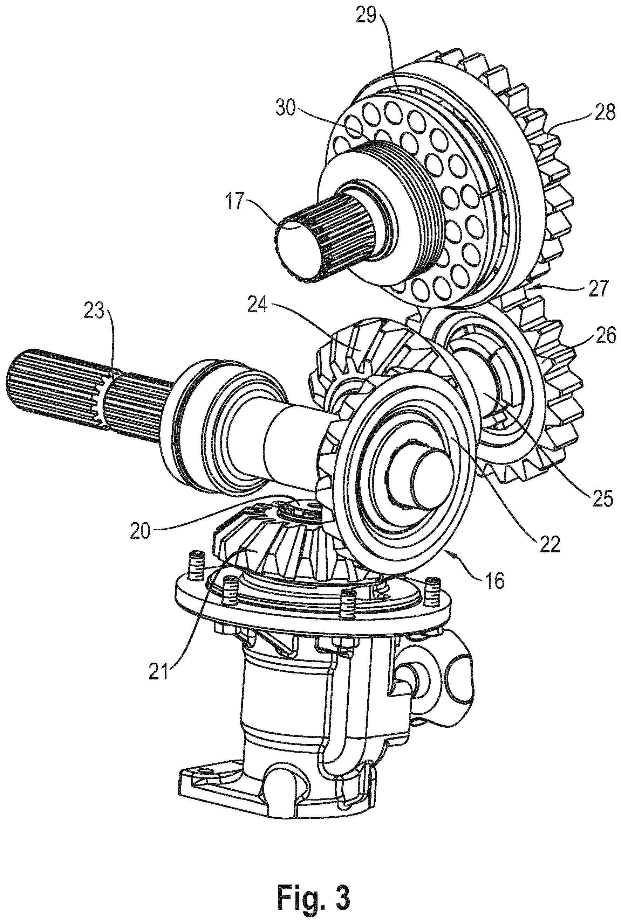

In der Figur 3 ist der Rädertrieb der Getriebebaugruppe 16 dargestellt. Diese weist eine Getriebeeingangswelle 20 mit einem darauf angeordneten Antriebskegelrad 21 auf. Das Antriebskegelrad 21 befindet sich im Eingriff mit einem ersten Abtriebskegelrad 22, das auf einer zum Querförderer 9 führenden Welle 23 angeordnet ist. Das erste Abtriebskegelrad 21 weist außerdem einen Zahneingriff mit einem zweiten Abtriebskegelrad 24 auf, das auf einer Zwischenwelle 25 angeordnet ist und über diese ein Antriebsrad 26 einer Stirnradstufe 27 antreibt. Weiterhin gehört zu der Stirnradstufe 27 ein Abtriebsrad 28, das die bereits im Zusammenhang mit der Figur 1 erläuterte Abtriebswelle 17 über eine Überlastkupplung 29 antreibt. Bestandteil dieser Überlastkupplung 29 ist dabei ein Paket Tellerfedern 30.

Wie aus der Figur 3 hervorgeht, ist durch diese Anordnung der sehr kurz bauende, die Überlastkupplung 29 aufnehmende Abtrieb auf die Gelenkwelle 16 gegenüber der Getriebeeingangswelle 18 in Ernterichtung des Schneidwerks 1 nach hinten versetzt, so dass sich ein relativ großer Abstand zwischen der Getriebebaugruppe 16 und dem Messergetriebe 8 ergibt, wodurch der Verschiebeweg der Gelenkwelle 18 vergrößert wird. Außerdem ist die Überlastkupplung 29 in die Getriebebaugruppe 16 integriert.

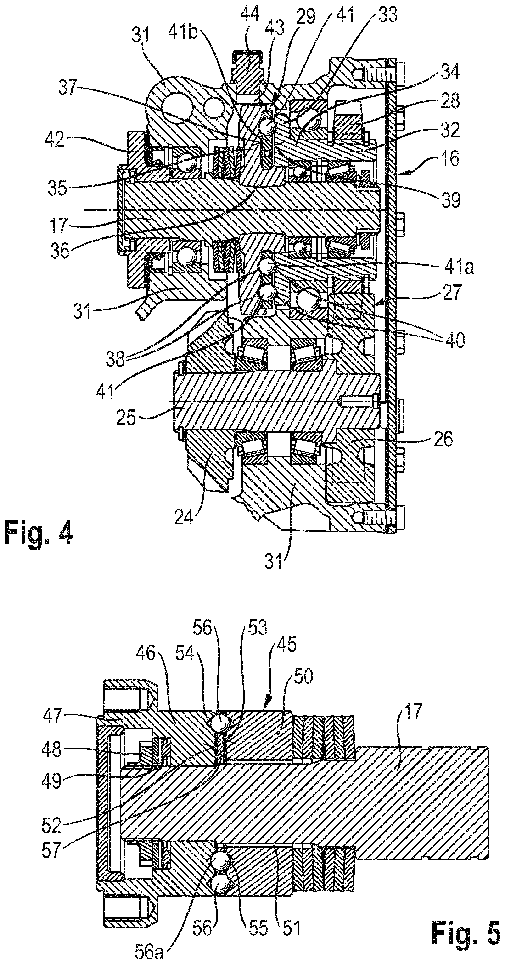

Aus der Figur 4 gehen die wesentlichen Bauteile dieser Anordnung nochmals im Längsschnitt hervor, wobei sie in einem Getriebegehäuse 31 angeordnet sind. Dabei ist auch erkennbar, dass das Abtriebsrad 26 auf einer auf der Abtriebswelle 17 drehbar gelagerten Hohlwelle 32 drehfest angeordnet ist. Diese Hohlwelle 32 bildet gemeinsam mit einem Flansch 33 eine Nabe 34. Ferner ist auf der Abtriebswelle 17 ein ebenfalls flanschartig ausgebildeter Mitnehmer 35 angeordnet, der über ein Mitnahmeprofil 36 drehfest aber axial verschiebbar auf der Abtriebswelle 17 geführt ist. Die Nabe 34 weist eine Stirnfläche 37 auf, in der um 180° versetzt zueinander drei Ausnehmungen 38 vorgesehen sind. Dieser Stirnfläche 37 der Nabe 34 gegenüberliegend ist eine Stirnfläche 39 des Mitnehmers 35 angeordnet, die ebenfalls drei um 180° zueinander versetzte Ausnehmungen 40 aufweist. Zwischen diesen Stirnflächen 37 und 39 befinden sich Rastkörper 41 und 41a, die in die Ausnehmungen 38 und 40 eingreifen und in einem kreisringförmigen Käfig 41b geführt sind.

Der Figur 4 ist weiterhin zu entnehmen, dass sich auf einem äußeren Radius zwei Rastkörper 41 und auf einem inneren Radius nur ein Rastkörper 41a befinden. Der Darstellung kann ebenfalls entnommen werden, dass der Mitnehmer 35 unter der Vorspannung des Pakets von Tellerfedern 30 in Richtung der Nabe 34 vorgespannt ist. Außerdem ist auf der Abtriebswelle 17 ein Abtriebsflansch 42 angeordnet, über welchen die Gelenkwelle 18 antreibbar ist. Schließlich geht aus der Darstellung hervor, dass auf dem Mitnehmer 35 ein Triggerrad 43 befestigt ist, das mit einem Sensor 44 zusammenwirkt. Auf diese Weise werden Störungen im Antrieb des Messergetriebes 8, die beim Auslösen der Überlastkupplung 29 auftreten, dem Fahrer in einer Fahrerkabine der Erntemaschine signalisiert.

Eine alternative Ausbildung und Anordnung einer Überlastkupplung 45 geht aus der Figur 5 hervor. Dabei ist im Gegensatz zu der Figur 4 keine Hohlwelle vorgesehen, sondern die Abtriebswelle 17 wird vorzugsweise direkt über eine nicht dargestellte Stirnradstufe angetrieben. Dabei ist eine Nabe 46 mit einem Abtriebsflansch 47 versehen, während ein auf der Abtriebswelle 17 befestigter Anlaufring 48 eine Laufbahn für ein Axialnadellager 49 bildet. An diesem Anlaufring 48 wird folglich die Nabe 46 frei drehbar, aber in axialer Richtung abgestützt, an der Abtriebswelle 17 geführt. Ein Mitnehmer 50 ist über ein Mitnahmeprofil 51 längsverschieblich, aber drehfest auf der Abtriebswelle 17 angeordnet. Weiterhin sind, wie bereits nach Figur 4 vorgesehen, zwischen den Stirnflächen 52 und 53 in Ausnehmungen 54 und 55 entsprechende Rastkörper 56 und 56a angeordnet. Aus der Figur 5 geht hervor, dass diese Rastkörper 56 und 56a, die als Sperrkugeln ausgebildet sind, in einem kreisringförmigen Käfig 57 geführt sind.

### Bezugszeichenliste

- 1: Schneidwerk
- 2: Schneidtisch
- 3: Schneidwerksmulde
- 4: Trennebene
- 5: Mähmesser
- 6: Messerklingen
- 7: Finger
- 8: Messergetriebe
- 8a: Gehäuse von 8
- 9: Kurbelzapfen
- 10: Querförderer
- 11: Schneckengang von 10
- 12: Schneckengang von 10
- 13: Schrägförderer
- 14: Welle
- 15: Kardanwelle
- 16: Getriebebaugruppe
- 17: Abtriebswelle
- 18: Gelenkwelle
- 19: Eingangswelle
- 19a: Schwungmasse
- 20: Getriebeeingangswelle
- 21: Antriebskegelrad
- 22: erstes Abtriebskegelrad
- 23: Welle von 10
- 24: zweites Abtriebskegelrad
- 25: Zwischenwelle
- 26: Antriebsrad
- 27: Stirnradstufe
- 28: Abtriebsrad
- 29: Überlastkupplung
- 30: Tellerfeder
- 31: Getriebegehäuse
- 32: Hohlwelle
- 33: Flansch
- 34: Nabe
- 35: Mitnehmer
- 36: Mitnahmeprofil
- 37: Stirnfläche von 34
- 38: Ausnehmungen von 37
- 39: Stirnfläche von 35
- 40: Ausnehmungen von 39
- 41: Rastkörper
- 41a: Rastkörper
- 41b: Käfig
- 42: Antriebsflansch
- 43: Triggerrad
- 44: Sensor
- 45: Überlastkupplung
- 46: Nabe
- 47: Antriebsflansch
- 48: Anlaufring
- 49: Axialnadellager
- 50: Mitnehmer
- 51: Mitnahmeprofil
- 52: Stirnfläche von 46
- 53: Stirnfläche von 50
- 54: Ausnehmung von 52
- 55: Ausnehmung von 53
- 56: Rastkörper
- 56a: Rastkörper
- 57: Käfig

## Patentansprüche

1. Schneidwerk (1) für eine selbstfahrende Erntemaschine mit einem Mähwerk sowie mit einer Getriebebaugruppe (16), die zumindest einen innerhalb eines Getriebegehäuses (31) angeordneten Kegeltrieb aufweist und deren Abtriebswelle (17) über eine Gelenkwelle (18) mit einer Eingangswelle (19) eines einen Exzentertrieb aufweisenden Messergetriebes (8) verbunden ist, wobei das Messergetriebe (8) in einem Gehäuse (8a) angeordnet ist, **dadurch gekennzeichnet, dass** innerhalb des Getriebegehäuses (31), zwischen dem Kegeltrieb und der Gelenkwelle (18) eine mit zumindest einem vorgespannten Rastkörper (41, 41a, 56, 56a) versehene Überlastkupplung (29, 45) angeordnet ist, wobei auf der Abtriebswelle (17) eine Nabe (46) frei drehbar angeordnet ist, die mit der Gelenkwelle (18) verbunden ist und mit einem drehfest auf der Abtriebswelle (17) angeordneten Mitnehmer (50) zusammenwirkt, wobei die Nabe (46) und/oder der Mitnehmer (50) mit jeweils zumindest einer Ausnehmung (54, 55) zur Aufnahme von zumindest einer als Rastkörper (56, 56a) wirkenden Sperrkugel ausgebildet sind.

2. Schneidwerk (1) nach Anspruch 1, **dadurch gekennzeichnet, dass** ein das Mähwerk aufnehmender Schneidtisch (2) gegenüber einer einen Querförderer (10) aufnehmenden Schneidwerksmulde (3) längsverschiebbar ausgebildet ist, wobei die Getriebebaugruppe (16) der Schneidwerksmulde (3) und das Messergetriebe (8) dem Schneidtisch (2) zugeordnet sind und wobei die Gelenkwelle (18) teleskopisch ausgebildet ist.

3. Schneidwerk (1) nach Anspruch 1, **dadurch gekennzeichnet, dass** die Ausnehmungen (54, 55) in der Nabe (46) und im Mitnehmer (50) derart angeordnet sind, dass nach einer drehmomentabhängigen Entsperrung des Antriebs der Gelenkwelle (18) eine Sperrung nach einer Verdrehung des Mitnehmers (50) gegenüber der Nabe (46) um 360° erfolgt.

4. Schneidwerk (1) nach Anspruch 1, **dadurch gekennzeichnet, dass** die jeweils zumindest eine Ausnehmung (54, 55) jeweils in einander zugewandten Stirnflächen (52, 53) der Nabe (46) und des Mitnehmers (50) angeordnet ist, wobei der Mitnehmer (50) auf der Abtriebswelle (17) in axialer Richtung verschiebbar geführt und in Richtung der Nabe (46) federbelastet ist.

5. Schneidwerk (1) nach Anspruch 3, **dadurch gekennzeichnet, dass** am Ende der Abtriebswelle (17) auf dieser ein Anlaufring (48) angeordnet ist, an dem sich die Nabe (46) über ein Axialnadellager (49) abstützt.

6. Schneidwerk (1) nach Anspruch 1, **dadurch gekennzeichnet, dass** die zumindest eine Sperrkugel in einem kreisringförmigen Käfig (57) geführt ist.

7. Schneidwerk (1) nach Anspruch 4, **dadurch gekennzeichnet, dass** der Mitnehmer (50) über zumindest eine Tellerfeder (30) in Richtung der Nabe (46) vorgespannt ist.

8. Schneidwerk (1) nach Anspruch 1, **dadurch gekennzeichnet, dass** die Getriebebaugruppe (16) eine Getriebeeingangswelle (20) mit einem auf dieser angeordneten Antriebskegelrad (21) aufweist, welches mit einem ersten einen Querförderer (10) der Erntemaschine antreibenden Abtriebskegelrad (22) in Eingriff steht, wobei das erste Abtriebskegelrad (22) in ein zweites die Abtriebswelle (17) antreibendes Abtriebskegelrad (24) eingreift, wobei das zweite Abtriebskegelrad (24) auf einer parallel zur Abtriebswelle (17) angeordneten Zwischenwelle (25) angeordnet ist und wobei die Zwischenwelle (25) die Abtriebswelle (17) über eine Stirnradstufe (27) antreibt.

## Claims

1. A header (1) for a self-propelled harvester comprising a mowing mechanism and a transmission assembly (16) which has at least one bevel gear arranged within a transmission housing (31) and the drive output shaft (17) of which is connected by way of a cardan shaft (18) to an input shaft (19) of a knife gear (8) having an eccentric drive, wherein the knife gear (8) is arranged in a housing (8a), **characterised in that** arranged within the transmission housing (31) between the bevel gear and the cardan shaft (18) is an overload clutch (29, 45) provided with at least one prestressed latching body (41, 41a, 56, 56a), wherein arranged freely rotatably on the drive output shaft (17) is a hub (46) which is connected to the cardan shaft (18) and cooperates with an entrainment means (50) arranged non-rotatably on the drive output shaft (17), wherein the hub (46) and/or the entrainment means (50) are formed with at least one respective recess (54, 55) for receiving at least one locking ball acting as a latching body (56, 56a).

2. A header (1) according to claim 1 **characterised in that** a cutting table (2) which accommodates the mowing mechanism is longitudinally displaceable with respect to a header tray (3) accommodating a transverse conveyor (10), wherein the transmission assembly (16) of the header tray (3) and the knife gear (8) are associated with the cutting table (2) and wherein the cardan shaft (18) is telescopic.

3. A header (1) according to claim 1 **characterised in that** the recesses (54, 55) in the hub (46) and in the entrainment means (50) are so arranged that after torque-dependent unlocking of the drive of the cardan shaft (18) locking occurs after rotation of the entrainment means (50) relative to the hub (46) through 360°.

4. A header (1) according to claim 1 **characterised in that** the respective at least one recess (54, 55) is respectively arranged in mutually facing end faces (52, 53) of the hub (46) and the entrainment means (50), wherein the entrainment means (50) is displaceably guided in the axial direction on the drive output shaft (17) and is spring-loaded in the direction of the hub (46).

5. A header (1) according to claim 3 **characterised in that** arranged at the end of the drive output shaft (17) on same is a thrust ring (48) against which the hub (46) is supported by way of a needle thrust bearing (49).

6. A header (1) according to claim 1 **characterised in that** the at least locking ball is guided in a cage (57) in the shape of a circular ring.

7. A header (1) according to claim 4 **characterised in that** the entrainment means (50) is prestressed in the direction of the hub (46) by way of at least one plate spring (30).

8. A header (1) according to claim 1 **characterised in that** the transmission assembly (16) has a transmission input shaft (20) with a drive bevel gear (21) arranged thereon and which is in engagement with a first drive output bevel gear (22) driving a transverse conveyor (10) of the harvester, wherein the first drive output bevel gear (22) engages into a second drive output bevel gear (24) driving the drive output shaft (17), wherein the second drive output bevel gear (24) is arranged on an intermediate shaft (25) arranged parallel to the drive output shaft (17) and wherein the intermediate shaft (25) drives the drive output shaft (17) by way of a spur gear stage (27).

## Revendications

1. Tablier de coupe (1) pour une machine de récolte automotrice, comprenant un mécanisme de coupe ainsi qu'un ensemble de transmission (16) qui comporte au moins un engrenage à roues coniques disposé à l'intérieur d'un carter de transmission (31) et dont l'arbre de sortie (17) est relié par l'intermédiaire d'un arbre articulé (18) à un arbre d'entrée (19) d'une transmission de couteaux (8) comportant un mécanisme à excentrique, la transmission de couteaux (8) étant disposée dans un carter (8a), **caractérisé en ce que**, à l'intérieur du carter de transmission (31), entre l'engrenage à roues coniques et l'arbre articulé (18), est disposé un accouplement de surcharge (29, 45) muni d'au moins un corps d'encliquetage précontraint (41, 41a, 56, 56a), sur l'arbre de sortie (17) étant disposé en libre rotation un moyeu (46) qui est relié à l'arbre articulé (18) et coopère avec un moyen d'entraînement (50) solidarisé en rotation à l'arbre de sortie (17), le moyeu (46) et/ou le moyen d'entraînement (50) étant conçu(s) chacun avec un évidement (54, 55) pour recevoir au moins une bille de blocage faisant fonction de corps d'encliquetage (56, 56a).

2. Tablier de coupe (1) selon la revendication 1, **caractérisé en ce qu'**une table de coupe (2) recevant le mécanisme de coupe est conçue avec une possibilité de déplacement longitudinal par rapport à un bac de tablier de coupe (3) recevant un convoyeur transversal (10), l'ensemble de transmission (16) étant associé au bac de tablier de coupe (3) et la transmission de couteaux (8) l'étant à la table de coupe (2), et l'arbre articulé (18) étant conçu de manière télescopique.

3. Tablier de coupe (1) selon la revendication 1, **caractérisé en ce que** les évidements (54, 55) dans le moyeu (46) et dans le moyen d'entraînement (50) sont disposés de façon qu'après un déblocage, en fonction du couple, de l'entraînement de l'arbre articulé (18), il se produise un blocage après une rotation du moyen d'entraînement (50) de 360° par rapport au moyeu (46).

4. Tablier de coupe (1) selon la revendication 1, **caractérisé en ce que** le au moins un évidement (54, 55) est ménagé respectivement dans des faces frontales (52, 53) tournées l'une vers l'autre du moyeu (46) et du moyen d'entraînement (50), le moyen d'entraînement (50) étant guidé coulissant sur l'arbre de sortie (17) dans la direction axiale et étant soumis à une sollicitation élastique en direction du moyeu (46).

5. Tablier de coupe (1) selon la revendication 3, **caractérisé en ce qu'**à l'extrémité de l'arbre de sortie (17) est disposé sur celui-ci un anneau de butée (48) contre lequel le moyeu (46) prend appui par l'intermédiaire d'un roulement à aiguilles axial (49) .

6. Tablier de coupe (1) selon la revendication 1, **caractérisé en ce que** la au moins une bille de blocage est guidée dans une cage annulaire (57).

7. Tablier de coupe (1) selon la revendication 4, **caractérisé en ce que** le moyen d'entraînement (50) est précontraint en direction du moyeu (46) par l'intermédiaire d'au moins un ressort Belleville (30).

8. Tablier de coupe (1) selon la revendication 1, **caractérisé en ce que** l'ensemble de transmission (16) comporte un arbre d'entrée de transmission (20) avec une roue conique d'entraînement (21) qui est disposée dessus et qui est en prise avec une première roue conique de sortie (22) entraînant un convoyeur transversal (10) de la machine de récolte, la première roue conique de sortie (22) s'engrenant dans une seconde roue conique de sortie (24) entraînant l'arbre de sortie (17), la seconde roue conique de sortie (24) étant disposée sur un arbre intermédiaire (25) disposé parallèlement à l'arbre de sortie (17), et l'arbre intermédiaire (25) entraînant l'arbre de sortie (17) par l'intermédiaire d'un étage de roues droites (27).
